## Europäisches Patentamt
## European Patent Office
## Office européen des brevets

(11) Numéro de publication: **0 041 448**
**B1**

(12) **FASCICULE DE BREVET EUROPEEN**

(45) Date de publication du fascicule du brevet: **12.12.84**

(21) Numéro de dépôt: **81400848.8**

(22) Date de dépôt: **27.05.81**

(51) Int. Cl.³: **A 01 N 47/44, C 11 D 3/48 //
(A01N47/44, 33/12)**

(54) **Nouvelle composition désinfectante comprenant un ammonium quaternaire et un oligomère de chlorhydrate d'hexaméthylène biguanide.**

(30) Priorité: **29.05.80 FR 8011892**

(43) Date de publication de la demande:
**09.12.81 Bulletin 81/49**

(45) Mention de la délivrance du brevet:
**12.12.84 Bulletin 84/50**

(84) Etats contractants désignés:
**AT BE CH DE FR GB IT LI LU NL SE**

(56) Documents cités:
**FR-A-2 344 295**
**FR-A-2 390 100**
**FR-A-2 404 067**

(73) Titulaire: **Salkin, Nicolas
36 avenue de Villepreux
F-92420 Vaucresson (FR)**

(72) Inventeur: **Salkin, Nicolas
36 avenue de Villepreux
F-92420 Vaucresson (FR)**

(74) Mandataire: **Combe, André et al
CABINET BEAU DE LOMENIE 55 rue
d'Amsterdam
F-75008 Paris (FR)**

Courier Press, Leamington Spa, England.

## Description

La présente invention concerne une nouvelle composition désinfectante agissant très rapidement et fortement.

Le brevet français 2 390 100 décrit des compositions contenant un dérivé d'ammonium quaternaire et un composant guanidé en spécifiant qu'une telle association avait été réalisée pour la protection du bois et des matières à base de bois contre les champignons destructeurs.

Dans le brevet français 2 342 074 du demandeur, on a décrit des produits désinfectants à rémanence d'action, à savoir ayant une action prolongée dans le temps, et on a fait état dans cette publication d'un procédé de dépôt d'un polymère filmogène contenant au moins un désinfectant qui confère à la pellicule formée une action bactéricide vis-à-vis des germes qui pourraient se déposer sur celle-ci et qui proviendraient de l'air ambiant ou qui seraient déposés par contact. Une des conditions mentionnées dans ce brevet est une parfaite comptabilité entre les germicides, les solvants, les polymères ou copolymères, et les autres additifs possibles. Il est toutefois essentiel que le ou les germicides fassent preuve d'une efficacité maximum en ce qui concerne la vitesse de destruction des microorganismes et que le spectre d'activité soit le plus large possible.

Selon la présente invention, on a cherché à élargir le champ d'application du brevet 2 342 074, utilisant des compositions sur des surfaces inertes telles que murs, plafonds, poignées de portes et chariots ou tables d'opération et on a voulu déposer des compositions désinfectantes sur la peau humaine, par exemple, pour désinfecter les mains des chirurgiens avant la mise de gants, les mains des infirmières et autre personnel hospitalier. On désire ainsi empêcher la contamination des malades le personnel par et les contaminations croisées entre les malades. On a voulu effectuer la désinfection pré et post-opératoire de la peau, du champ opératoire, laver les plaies, etc. . . . Il a donc fallu rechercher des bactéricides très puissants mais non irritants et n'ayant pas tendance à pénétrer et diffuser à travers la peau.

Un des produits qui possède ces caractéristiques (outre les sels de chlohexidine décrits dans le brevet mentionné ci-dessus) est l'oligomère (n=4 à 7) de chlorhydrate d'hexaméthylène biguanide décrit dans le brevets anglais n° 702 268 et 1 167 249. Ce produit est très peu toxique (la dose léthale-DL-50 est de plus de 5000 mg par kg) et la concentration d'utilisation ne provoque pas d'irritation de la peau ni des yeux. Il est connu comme étant non allergène pour la peau et il est exempt de toxicité systémique à travers l'épiderme.

Le choix des oligomères de chlorhydrate d'hexaméthylène biguanide semble être meilleur que celui des sels de chlorhexidine du fait de la très grande instabilité de ces derniers produits à la lumière; en présence de la plupart des tensioactifs ils ont une légère variation du pH, en présence d'hypochlorite ils sont transformés en un colorant indélébile rouge et finalement il y a possibilité de formation de chloraniline, produit considéré comme métabolisant et toxique. L'oligomère de chlorhydrate d'hexaméthylène biguanide n'a aucun de ces inconvénients. Son pouvoir bactéricide est très élevé et rapide. Une solution de ce produit à 20% dilué à 0,25% (soit 0,05%) détruit en 3 min, à 22°C, 99,99% d'une population microbienne, c'est-à-dire que sur un inoculum initial de $10^9$ microorganismes par ml, il n'est reste que 0,01% soit tout de même $10^5$ microorganismes par ml. Les essais ont été faits entre autres sur Staphylococcus Aureus, Escherichia Coli, Pseudomonas Aerugonosa, Saccharomyces. L'activité germicide est à peine diminuée par la présence de 1 ou 5% de sang, 1% de lait, 1% de peptone. Par contre, tout en étant très actif vis-à-vis des bactéries gram+ et gram—, l'oligomère de chlorhydrate d'hexaméthylène biguanide (OCHB) n'est que très peu efficace sur les levures, les moisissures et les champignons. Pour obvier à cette lacune, il a été ajouté à la solution de OCHB une faible quantité d'un ou plusieurs composés d'ammonium quaternaire.

On a découvert de manière surprenante que les compositions contenant 0,1 à 4% en poids d'un oligomère de chlorhydrate d'hexaméthylène biguanide (OCHB) et de 0,01 à 1,5% en poids de chlorure de didécyldiméthylammonium (CDDA) présentent des activités bactéricides et fongicides très supérieures à celles obtenues en utilisant des quantités équivalentes des produits formant ladite composition. La synergie observée est importante et lesdites compositions ont une action rapide et portée sur la plupart des germes.

Après addition d'un mélange d'oligomère d'hexaméthylène biguanide (0,15%) et de chlorure de didécyl diméthyl ammonium (0,03%), la baisse de la population microbienne est de $10^6$ après 1 min. de contact (99,9999%). La même solution appliquée sur la main pendant 1 min. laisse 0 survivants sur la surface de la peau (population normale $10^6$). Ce résultat ne peut être obtenu avec aucun produit connu à ce jour, compte tenu des normes imposées, c'est-à-dire absence de toxicité, d'irritation, etc. . . .

Ce mélange convient particulièrement bien quand il est utilisé avec un polymère filmogène, car le film déposé détruit rapidement tous les microorganismes à la surface et reste germicide pendant très longtemps.

L'utilisation du didécyl diméthylammonium dans les compositions selon l'invention présente notamment un avantage certain, du fait de son très grand pouvoir mouillant en abaissant la tension superficielle du mélange à 2,81 N/m² environ.

La composition selon l'invention contient de 0,01% à 1,5% de CDDA et de 0,1 à 4% de OCHB. C'est une solution aqueuse et/ou alcoolique.

La présente description, en regard des exemples annexés, permettra de mieux comprendre comment l'invention peut être mise en pratique.

Exemple comparatif 1 a

Mesure de l'activité bactéricide de l'oligomère de chlorhydrate d'hexaméthylène biguanide (OCHB, n=4 à 7).

On utilise l'OCHB en solution dans de l'eau distillée. On ajoute un inoculum d'un microorganisme à une concentration donnée. Au bout de 3 minutes, on compte les bactéries survivantes et on exprime le résultat en puissance de 10.

On obtient le tableau I suivant:

TABLEAU I

| Microorganisme | Concentration de OCH B % | Concentration de microorganismes par ml | |
|---|---|---|---|
| | | initiale | finale |
| Staphylococcus Aureus | 0,15 | $10^9$ | moins de $10^5$ |
| Escherichia Coli | 0,15 | $10^9$ | moins de $10^5$ |
| Pseudomonas Aeruginosa | 0,15 | $10^9$ | plus de $10^6$ |
| Saccharomyces | 0,15 | $5.10^7$ | $15.10^4$ |

La baisse de microorganismes est donc de $10^4$/ml.

Exemple comparatif 1 b

Mesure de l'activité fongicide du OCHB.

Ce produit est peu actif contre les moisissures et il est nécessaire d'en utiliser de grandes quantités. On inocule de l'extrait d'agar, on laisse à incubation pendant 4 ou 5 jours et on ajoute la concentration de OCHB qui empêche la croissance des germes. On obtient les résultats suivants. (Tableau II)

TABLEAU II

| Microorganisme | Concentration de OCHB qui inhibe la croissance (ppm) |
|---|---|
| Aspergillus Niger | 400 |
| Penicillium Notatum | 1,3 |
| Candida Albicans | 250 |

Exemple comparatif 1 c

Mesure de l'activité bactéricide d'un ammonium quaternaire, à savoir le chlorure de didécyl diméthyl ammonium (CDDA).

On procéde comme pour l'exemple 1 a et on obtient les résultats suivants (tableau III) au bout de 1 minute.

**0 041 448**

TABLEAU III

| Microorganisme | Concentration de CDDA % | Concentration de microorganismes (germes par ml) | |
|---|---|---|---|
| | | initiale | finale |
| Steptococcus | 0,03 | $5.10^6$ | $3.10^3$ |
| Staphylococcus | 0,03 | $5.10^6$ | $8.10^3$ |
| Escherichia Coli | 0,03 | $5.10^5$ | $4.10^3$ |
| Pseudomonas | 0,03 | $5.10^5$ | $1.10^3$ |

Par conséquent on voit que la baisse en microorganismes est de $10^3$ seulement, au bout de une minute.

Exemple 1

Mesure de l'activité bactéricide et fongicide d'une composition selon l'invention.

On prépare la solution suivante:

OCHB                                    0,15%

CDDA                                    0,03%

Alcool éthylique à 90°                  q.s.p. 100%

On détermine l'activité bactéricide in vivo d'une telle composition.

On obtient le tableau IV qui rassemble les résultats suivants, après application de la solution pendant 1 min.

TABLEAU IV

| Microorganisme | Concentration de microorganismes en germes/ml | |
|---|---|---|
| | initiale | finale |
| Staphylococcus Aureus | $6.10^6$ | 0 |
| Escherichia Coli | $5.10^6$ | 2 |
| Saccharomyces | $7.10^6$ | 0 |
| Germes totaux | $20.10^6$ | 5 |

Ainsi on a une diminution de $10^6$ microorganismes en une minute.

On voit donc d'une part que l'action de chlorure de didécyl diméthyl ammonium et d'autre part que l'action de l'oligomère sont renforcées. L'activité de la solution selon l'invention est beaucoup plus rapide et importante.

Exemple 2

On prépare la solution suivante:

OCHB en solution à 20% dans l'eau        0,1 à 4%

CDDA                                     0,01 à 0,3%

Alcool éthylique ou eau ou leur mélange  q.s.p. 100%.

On utilise cette solution comme désinfectant pour le personnel des hôpitaux, les mains des chirurgiens, les surfaces diverses pouvant être contaminées, les appareil de rayons X, les instruments de chirurgie, etc. . . .

4

Exemple 3

On prépare le mélange suivant:

| | |
|---|---|
| OCHB à 20% en solution dans l'eau | 20% |
| CDDA | 1,5% |
| Eau déminéralisée | q.s.p. 100% |

Cette composition, utilisée à 4% est un des plus puisants stérilisants pour les instruments de chirurgie.

Exemple 4

Le mélange suivant est préparé:

| | |
|---|---|
| Tensio-actif amphotère "MIRANOL" | 20% . |
| Diéthanolamine laurique | 4% |
| OCHB | 1% |
| CDDA | 0,2% |
| Distérate de polyéthylène glycol | 3 à 4% |
| Monoéthanolamide éthoxylé (5 à 6 moles d'oxyde d'éthylène) | 0 à 5% |
| Eau | q.s.p. 100% |

Exemple 5

On prépare une solution de lavage de plaies ou de la peau, ayant la composition ci-dessous:

| | |
|---|---|
| OCHB en solution à 20% | 1,5% |
| "MIRANOL" Détergent amphotère | 15% |
| CDDA | 0,02% |

Colorant bleu ou rose+eau.

On mesure l'activité bactéricide de cette composition. On obtient les résultats suivants (tableau V):

TABLEAU V

| Concentration initiale microorganismes/ml | Concentration après 1 min. d'application du produit (microorganismes/ml) |
|---|---|
| $1,5 . 10^6$ | 80 |
| $2,3 . 10^6$ | 90 |
| $1,8 . 10^6$ | $1,7 . 10^2$ |

**0 041 448**

Exemple 6

On prépare une laque à rémanence d'action ayant la composition suivante:

| | |
|---|---|
| OCHB à 20% | 1,5% |
| CDDA | 0,02% |
| Polyvinylpyrrolidone (PM 40.000) | 2% |
| Alcool à 70° | q.s.p. 100% |

On détermine l'activité bactéricide selon la méthode de Gashen. Un groupe de trois femmes et de trois hommes se lavent les mains avec du savon pendant une minute, puis ils se rincent celles-ci à l'eau et se les sèchent. Enfin, après 60 min. d'attente, on dénombre la flore sur chaque main. On applique la solution selon l'invention pendant une min. sur chaque main droite, la main gauche servant de référence. On obtient les résultats suivants (tableau VI):

TABLEAU VI

| Concentration initiale de microorganismes/ml | Concentration finale de microorganismes/ml |
|---|---|
| $0,55 . 10^6$ | 60 |
| $0,98 . 10^6$ | 95 |
| $1,8 . 10^6$ | $1,1 . 10^2$ |

En outre l'activité du désinfectant reste apparemment aussi bonne après port du gant pendant une heure, puisque la population bactérienne reste au même niveau qu'après action du produit pendant une minute. La rémanence d'action est donc très bonne pour cette laque.

Exemple 7

La solution de laque suivante est préparée:

| | |
|---|---|
| OCHB en solution à 20% | 1 à 4% |
| Polyvinylpyrrolidone (PM 300 000 à 40 000) | 0,5 à 2% |
| Ammonium quaternaire (CDDA) | 0,3% |
| Glutaraldéhyde en solution à 50% | 0,5 à 2% |
| Eau | q.s.p. 100% |

pH fixé entre 6,5 et 6,8.

Ce produit est utilisé pour arroser les surfaces contaminées (tel quel on dilué) et il détruit tous les microorganismes à la surface (bactéries gram+ et −, levures, spores, virus) et forme un léger film ayant une rémanence qui permet de détruire toutes les retombées de germes environnants. Il est utilisé tel quel pour la stérilisation à froid du circuit interne d'appareil d'hemodialyse (rein artificiel), pour la stérilisation à froid des instruments et du matériel de chirurgie, de médecine et d'examen interne (endoscope . . .). Il détruit à froid tous les microorganismes, bactéries ±, virus, spores, champignons. La présence de polymère polyvinyle pirrolidone permet de garder en suspension les souillures et empêche leur redéposition.

**Revendications**

1. Composition bactéricide et fongicide caractérisée en ce qu'elle contient de 0,1 à 4% en poids d'un oligomère de chlorhydrate d'hexaméthylène biguanide (OCHB) et de 0,01 à 1,5% en poids de chlorure de didécyl diméthyl ammonium (CDDA).

2. Composition selon la revendication 1 caractérisée en ce qu'elle se présente sous forme d'une solution dans l'alcool ou dans l'eau ou dans un mélange eau-alcool.

3. Composition selon la revendication 1 caractérisée en ce qu'elle comporte un polymère filmogène qui est une polyvinylpyrrolidone de poids moléculaire compris entre 40 000 et 300 000.

**Patentansprüche**

1. Bakterizide und fungizide Zusammensetzung, dadurch gekennzeichnet, daß sie 0,1 bis 4 Gew.-% eines Hexamethylenbiguanid-Hydrochlorid-Oligomeren (OCHB) und 0,01 bis 1,5 Gew.% Didecyl-dimethyl-ammoniumchlorid (CDDA) enthält.

2. Zusammensetzung nach Anspruch 1, dadurch gekennzeichnet, daß sie in Form einer Lösung in Alkohol oder in Wasser oder in einer Wasser-Alkohol-Mischung vorliegt.

3. Zusammensetzung nach Anspruch 1, dadurch gekennzeichnet, daß sie ein filmbildendes Polymeres enthält, welches Polyvinylpyrrolidon mit einem Molgewicht zwischen 40 000 und 300 000 ist.

**Claims**

1. Bactericidal and fungicidal composition characterized in that it contains from 0.1 to 4% by weight of polymeric hexamethylene biguanide hydrochloride (PHMB) and from 0.01 to 1.5% by weight of didecyl dimethyl ammonium chloride (DDAC).

2. Composition according to claim 1 characterized in that it is in the form of a solution in alcohol or in water or in a water-alcohol mixture.

3. Composition according to claim 1, characterized in that it contains a film forming polymer which is polyvinylpyrrolidone having a molecular weight of 40,000 to 300,000.